(19) Europäisches Patentamt
European Patent Office
Office européen des brevets

(11) Publication number : **0 560 567 A1**

(12) **EUROPEAN PATENT APPLICATION**

(21) Application number : **93301756.8**

(22) Date of filing : **09.03.93**

(51) Int. Cl.[5] : **C07D 251/32,** C07D 251/34, C07D 498/18, C08G 83/00, C10L 1/22

(30) Priority : **09.03.92 US 848474**
**09.03.92 US 848468**

(43) Date of publication of application :
**15.09.93 Bulletin 93/37**

(84) Designated Contracting States :
**BE DE FR GB IT NL**

(71) Applicant : **TEXACO DEVELOPMENT CORPORATION**
**2000 Westchester Avenue**
**White Plains, New York 10650 (US)**

(72) Inventor : **Sung, Rodney Lu-Dai**
**Starmill Road**
**Fishkill, New York 12524 (US)**
Inventor : **DeRosa, Thomas Francis**
**219 Spring Street**
**Passaic, New Jersey 07055 (US)**
Inventor : **Kaufman, Benjamin Joseph**
**35 Newhard Place**
**Hopewell Junction, New York (US)**

(74) Representative : **Green, Mark Charles et al**
**Urquhart-Dykes & Lord, 91 Wimpole Street**
**London W1M 8AH (GB)**

(54) **Calix-arene encapsulation of s-triazines and their use for reducing nitrogen oxides in Diesel fuel exhaust.**

(57) A rigid or non-rigid calix - arene matrix fully or partially encapsulating an s-triazine containing at least one hydroxyl group or a functionality which may be chemically converted *in situ* into a hydroxyl group. Such compositions increase solubility of s-triazines within diesel fuels. s-triazines generate the $NO_x$ pollutant reducing agent isocyanic acid.

EP 0 560 567 A1

Jouve, 18, rue Saint-Denis, 75001 PARIS

This invention relates to a chemical method of decreasing nitric oxide, NOx, levels, and more particularly to a composition of matter for reducing $NO_x$ levels in diesel fuel exhaust.

Nitrogen oxides are the oxidation products of elemental nitrogen, organic or inorganic nitrogen and oxygen at elevated temperatures. Nitrogen oxides include nitric oxide, NO; nitrogen dioxide, $NO_2$; nitrogen trioxide, $NO_3$; dinitrogen trioxide, $N_2O_3$; tetranitrogen pentaoxide, $N_4O_5$; tetranitrogen hexaoxide, $N_4O_6$; nitrous oxide, $N_2O$; and the like. Elevated temperatures required to prepare these oxidation products are routinely obtained in internal combustion engines utilizing gasoline, diesel, or aviation fuel.

There are ecological and environmental reasons to reduce or ideally eliminate NOx as an internal combustion oxidation product. Once produced, NOx is directly responsible for acid rain and photochemical smog. Moreover, chronic exposure to Nox has been directly linked with restricted pulmonary compliance in non-smoking healthy males; acute respiratory disease among children living in "high exposure" towns in Czechoslovakia; and a key irritant cited for the high incidence of chronic bronchitis among Japanese postal workers servicing urban centers as outlined in Medical and Biologic Effects of Environmental Pollutants by the National Academy of Sciences, 1977.

Numerous and physical methods have been suggested to reduce or eliminate NOx. Certain proposed techniques involve a great deal of capital outlay and require major consumption of additives, scrubbers, etc. For example, U.S. Patent 3,894,141 proposes a reaction of $NO_x$ with liquid hydrocarbons; U.S.Patent 4,405,587 proposes high temperature burning of $NO_x$ with a hydrocarbon; U.S. Patent 4,448,899 proposes reacting of $NO_x$ with an iron chelate; and U.S. Patent No. 3,262,751 reacts NOx with a conjugated diolefin.

Utilizing these inventions, discussed above, entails organic pollutant disposal problems along with the attendant problems of toxicity and malodorous environments. In addition, they require the presence of oxygen and are relatively expensive.

Thus, an object of the present invention is to provide an economical means and/or compounds that . effectively reduces the $NO_x$ in diesel fuel exhausts.

U.S. Patent 4,731,231 discloses a method of reducing NOx levels for stationary sources of NOx such as power plants utilizing fossil fuel. However, this invention is limited to stationary $NO_x$ sources only. This invention is not applicable to dynamic or non-stationary $NO_x$ sources, for example, gasoline or diesel powered vehicles, which means that a method for $NO_x$ reduction was not achieved.

Japanese Publication No. J550551-420 utilizes halocyanuric acid to remove malodorous fumes, e.g., mercaptans, sulfides, disulfides, ammonia or amines from gases by contact therewith followed by contact with activated carbon. Temperatures are reported in this publication as less than 80°C; and classical acid/base interactions appear to be involved (not pyrolysis decomposition products of the haolcyanuric acid).

Back et al., Can. J. Chem. 46.531(1968), disclose the effect of No on the photolysis of HNCO, the decomposition product of cyanuric acid. An increase of nitrogen concentration in the presence of large amounts of nitric oxide was observed utilizing a medium pressure mercury lamp for photolysis of HNCO. The increased concentration of nitrogen was associated by the authors with deduction of NO load by HNCO.

Furthermore, use of cyanuric acid as a source of isocyanic acid (HNCO) for purposes of studying various properties of the latter of its subsequent degradation products is also known. See, for example, Okable, J. Chem. Phys., 53,3507 (1970) and Perry J. Chem. Phys., 82,5485 (1985). However, heretofore, it was never suggested that cyanuric acid could be useful in the removal of NO from non-stationary sources.

The compounds of this invention are directed to the solubilization of cyanuric acid and its derivatives in diesel fuel; and the thermal enhancement of the same in order to survive the internal engine combustion event.

According to the present invention there is provided a rigid or non-rigid calix - arene matrix fully or partially encapsulating an s-triazine containing at least one hydroxyl group or a functionality which may be chemically converted *in situ* into a hydroxyl group.

For simplicity and clarity, wherever possible calix - arene will be represented by an abbreviated structure (I) shown below.

Calix
¦
(OH)

(I)

The partial or full encapsulation of hydroxyl-s-triazines by co- or homo-calix - arenes dramatically alters the solubility properties of the triazine. Moreover, by selecting high thermally stable calix - arenes monomer precursors, extraordinary thermal stability could be imparted to the calix - arene itself.
Encapsulation as used herein means the formation of a complex in which a guest molecule is caught in a hole of a host molecule with or without the formation of chemical bonds.

Although the partial or full incorporation of hydroxyl-s-triazines into a calix - arene matrix is essentially random, the unique chemical environment of the cavity itself will dramatically influence its NOx reducing strength. Specifically, a crucial chemical requirement of cyanuric acid or hydroxyl-s-triazine incorporation is that at least one, and preferably two, free hydroxyl groups must be present. The chemical underpinning for this requirement is that upon thermal unzipping free hydroxyl groups on s-triazine will generate the NOx reducing agent, isocyanic acid, HNCO.

Depicted below in Equations (Eq.) 1a, 1b, 1c and 1d are four encapsulations for triazines undergoing thermal decomposition.

Eq. 1a:

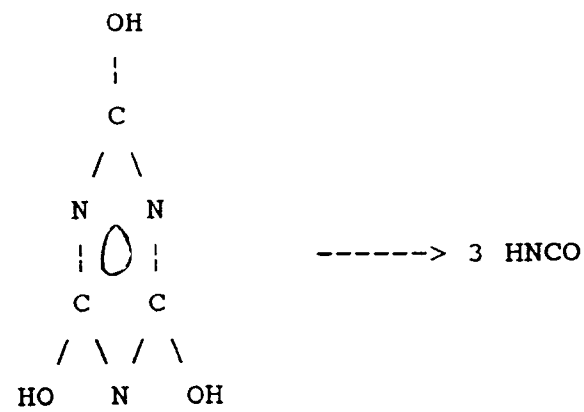


Eq. 1b:

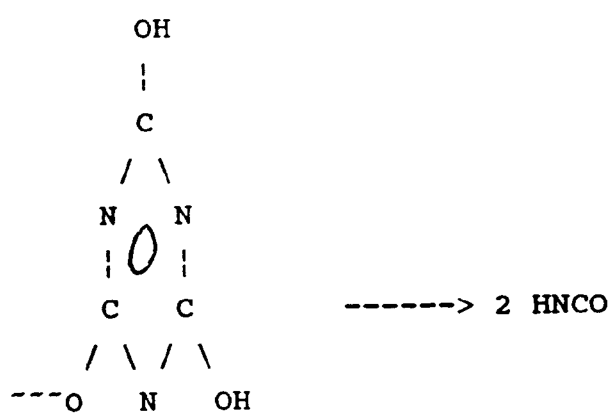

<u>Eq. 1c</u>:

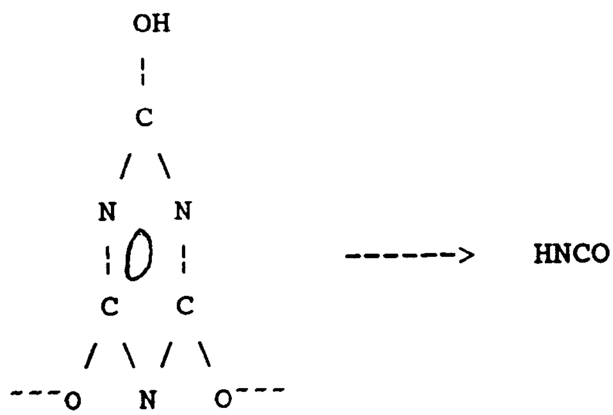

<u>Eq. 1d</u>:

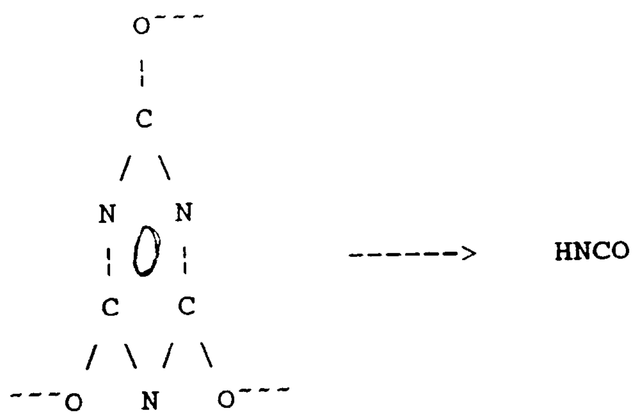

It is readily apparent the crucial role hydrogen atoms play in the generation of isocyanic acid. In addition to solubility and thermal stability enhancement, full or partial encapsulation within a calix - arene cavity offer chemical benefits. Firstly, full or partial encapsulation of s-triazines into the hydrophilic calix - arene cavity can provide a readily available supply of labile hydrogen atoms. Moreover, prior to an actual thermal decomposition, ortho-alkyl substituted phenolics routinely undergo 'ortho-quinone methide' while para-alkyl substituted phenolics undergo 'para-quinone methide' thermal rearrangements as illustrated below in Equation (Eq.) (2a) and (2b).

<u>Eq. 2a</u>:

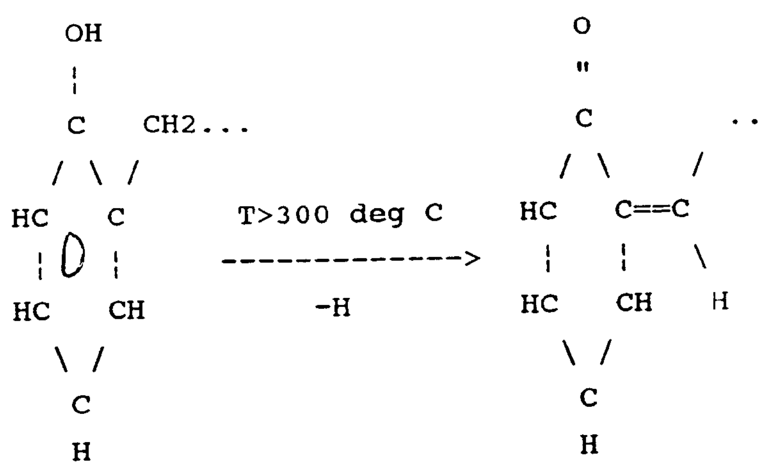

Eq. 2b:

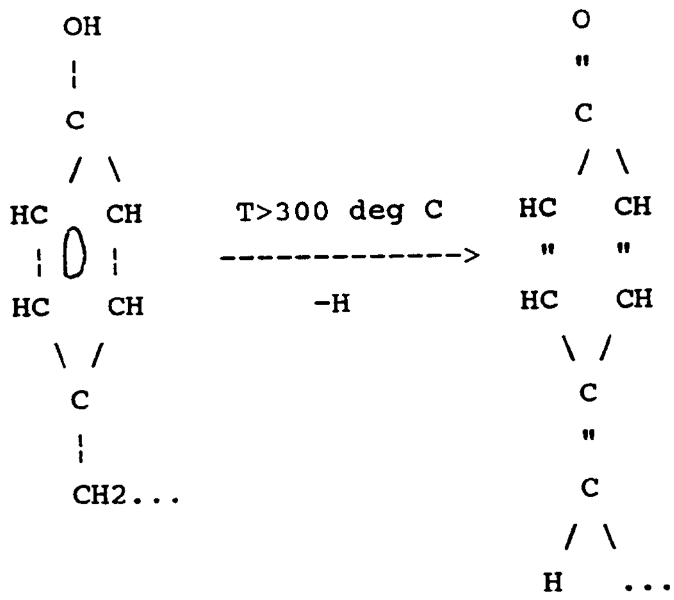


In both cases, acidic phenolic protons become available to augment the proton deficiency of triether-s-triazines to generate isocyanic acid, HNCO. During thermal degradation of calix - arenes, the encapsulator (host) will undergo degradation before its cavity contents (guest). This thermally-induced chemical process will essentially transform the calix - arene cavity center into a hydrogen atom 'sink' or repository.

According to the present invention, a chemical method has been developed to solubilize reducing agent precursors in diesel fuel and to enhance their overall thermal stability. Upon thermal decomposition, the reducing agent precursors which generate isocyanic acid, HNCO, are generically depicted below in Equation 3. The reducing agent precursors are hydroxyl s-triazines containing at least one hydroxyl function.

Eq. 3:

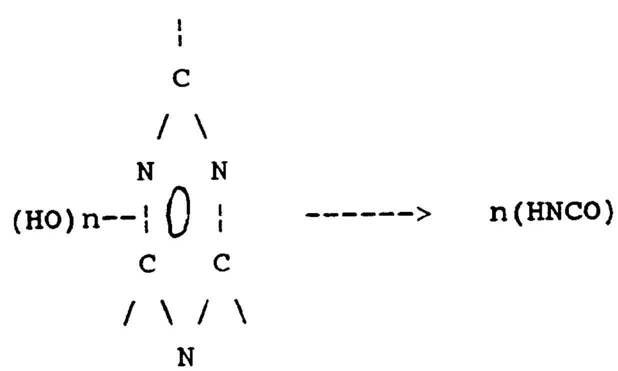

where n = 1-3

The method of encapsulating hydroxyl-s-triazines (as illustrated below by structures II, III, and IV), so that both dissolution and thermal stability of the molecule enhanced in diesel fuel becomes possible, comprising the steps of:

a) reacting an s-triazine containing at least one hydroxyl group (II); an s-triazine containing a functionality which may chemically converted insitu into a hydroxyl group (III); or an s-triazine containing both a hydroxyl group and another functionality which may be chemically converted insitu into a hydroxyl group (IV); and an alkaline salt of calix[8]arene; and

b) isolating said separating reaction products from impurities generated therefrom said process.

Chemical s-triazines which may be used in this process may be selected from those depicted below.

In all cases, the integer, n, may vary from 1 to 3.

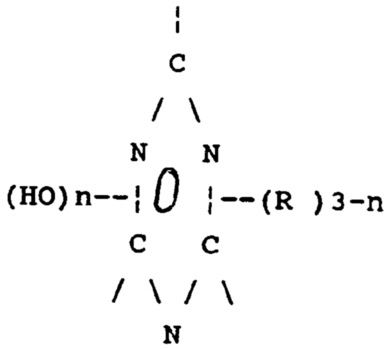

(II)

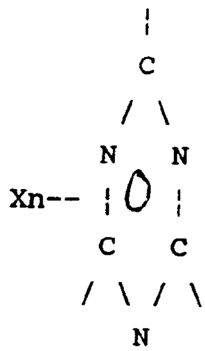

(III)

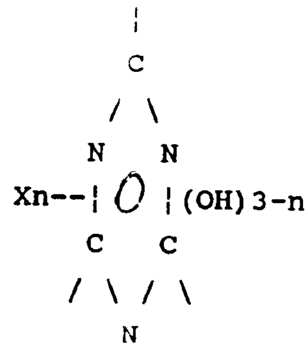

(IV)

In the preceding formulas R represents any inert non-reactive substituent. 'Non-reactive' shall mean non-reactive or inert to both the number of hydroxyl groups and to the chemical encapsulation process. It may be selected from the group consisting of $C_1$ to $C_{10}$ hydrocarbons that may be alkyl, aryl, linear or branched; or saturated or unsaturated. X represents any of the Group VIIa elements, although it is preferable to limit X to chlorine.

Cyclic, or rigid, calix - arenes that may be used in the present encapsulation process are generally represented below in formula (V).

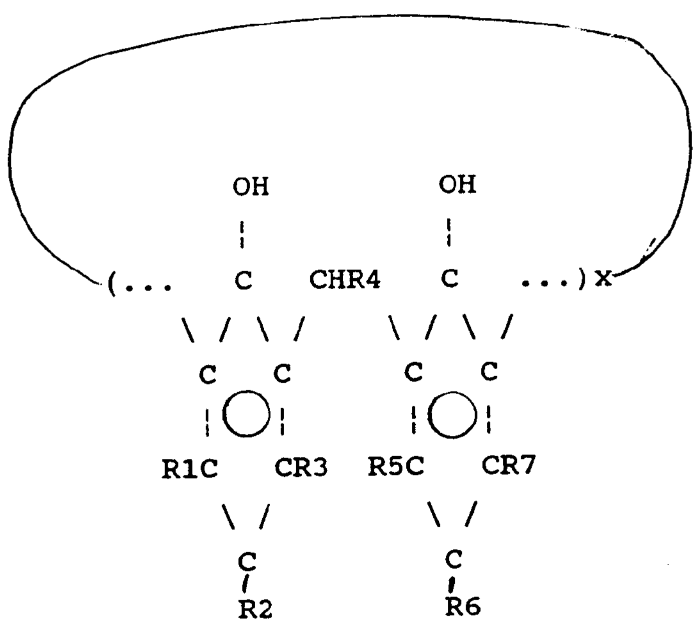

(V)

In the above formula (V), as well as formulas VI through XIV, the integer x indicates the size of the calix - arene and varies from 6-60 for homo-calix - arenes or those calix - arenes that are derived using a single phenolic material. It is most preferable, however, to restrict x to 8. In the case of co-calix - arenes, i.e., those calixarenes derived using two phenolic materials, it is preferable to restrict the range of x from 2 to 10; and

most preferable to limit x to 4. In formulas (Ia) and (V), above, and the following formulas, i.e., the reactant formula as well as the product formulas, (VI) through (XIV). R1, R2, R3, R5, R6, and R7 substituents enhance both the solubility and thermal properties of the calix - arene, and may be hydrogen or are a ($C_1$-$C_{50}$) hydrocarbon, including linear or branched aliphatic, or cycloaliphatic; or aliphatic cycloaliphatic groups; aromatic or polyaromatic; alkylaromatic and alkylpolyaromatic; saturated or unsaturated. They may also contain one or more heteroatoms as either an appendage or as part of one or more ring, cyclic or aromatic, structure. R4 is hydrogen or a ($C_1$-$C_{10}$) hydrocarbon. The hydrocarbon is preferably linear, but may also be branched; saturated or unsaturated; aromatic, polyaromatic, alkylaromatic, or alkylpolyaromatic.

The chemical method or process used to chemically encapsulate hydroxyl-s-triazines or derivatives which may be subsequently converted into hydroxyl-s- triazines and homo- or co-calixarenes is shown below in Equation (Eq.) 4. For illustrative purposes only, calix - arene is depicted as reacting with trichloro-s-triazine and subsequently encapsulating hydroxyl-s-triazine. The products generated by this method, are represented below by formulas VI through XIV.

Eq.4. 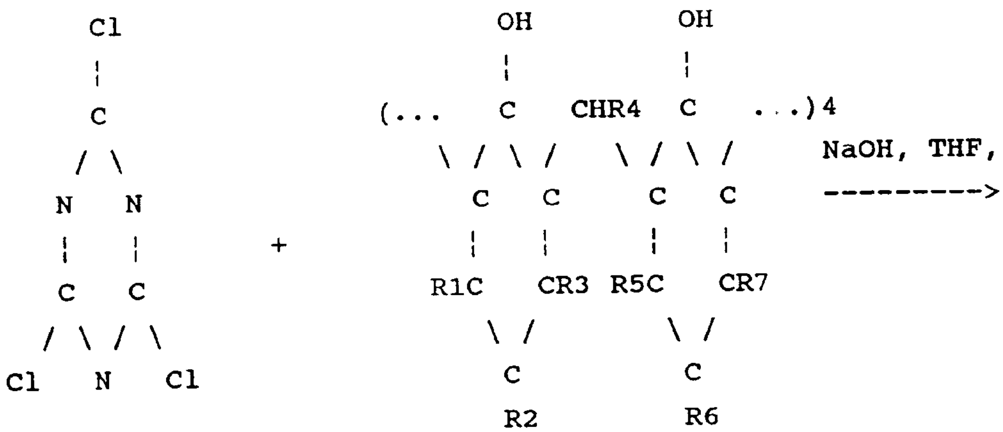


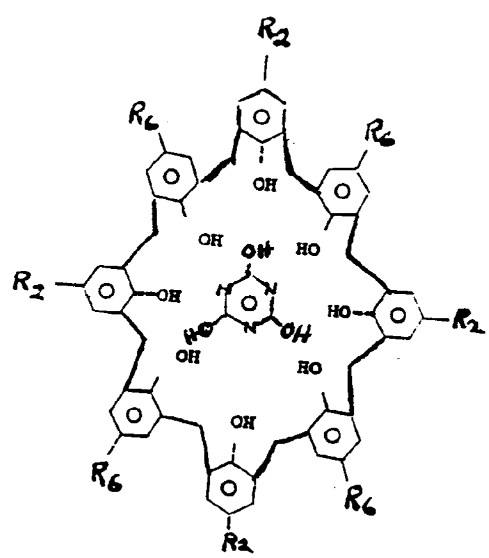

(VI)

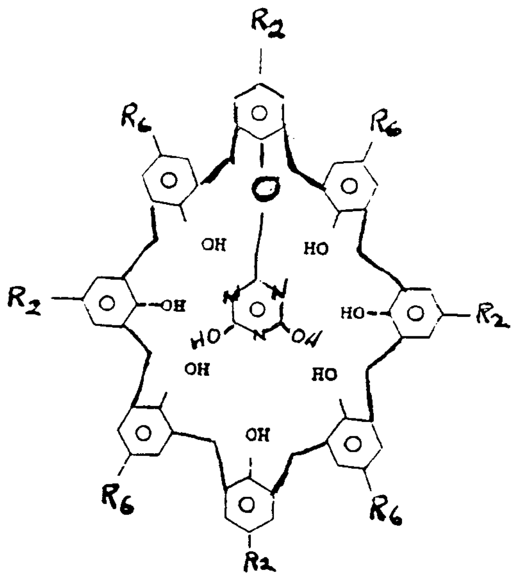

(VII)

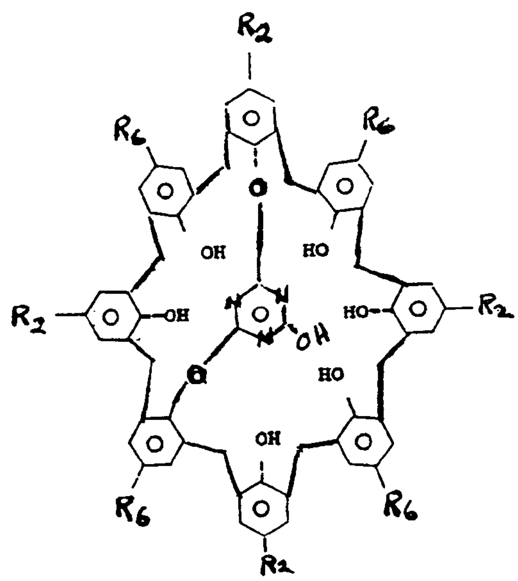

(VIII)

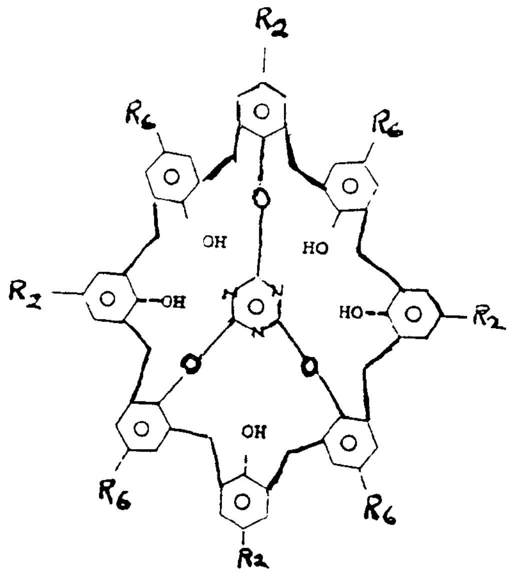

(IX)

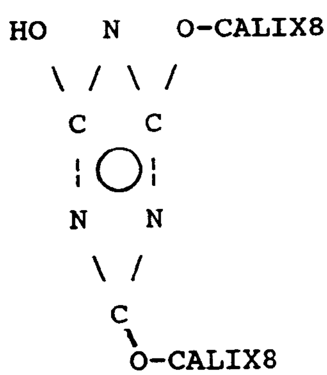

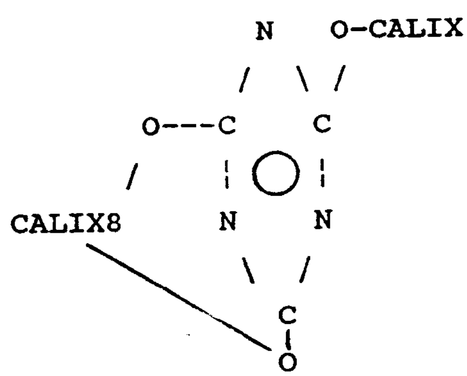

(X) (XI)

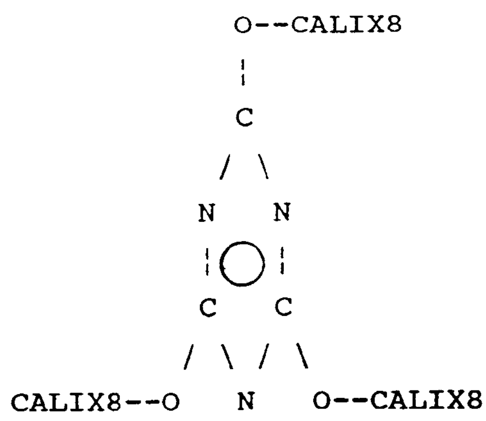

(XII)

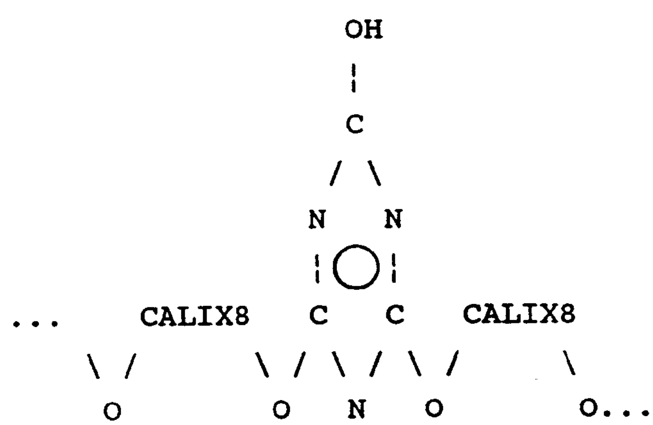

(XIII)

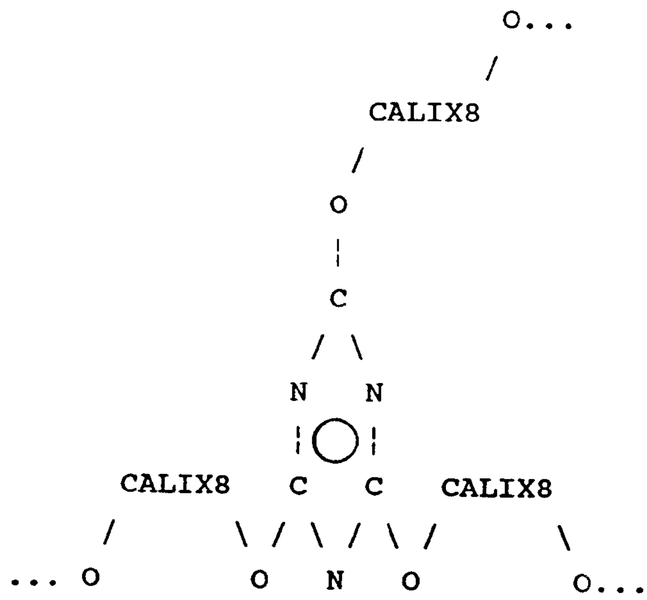

(XIV)

Particular compounds may be described as:

a) p-nonyl calix[8]arene-tri-hydroxyl-s-triazine;
b) (p-nonyl calix[8]arene)ether-di-hydroxyl-s-triazine;
c) (p-nonyl-calix[8]arene)diether-hydroxyl-s-triazine;
d) (p-nonyl-calix[8]arene)triether-s-triazine;
e) (p-phenyl-co-p-nonyl-calix[8]arene-trihydroxyl-s-triazine;
f) p-phenyl-co-p-nonyl-calix[8]arene ether-dihydroxyl-s-triazine;
g) (p-phenyl-c-p-nonyl-calix[8]arene)diether-s-triazine;
h) (phenyl-co-p-nonyl-calix[8]-arene)trietherhydroxyl-s-triazine;
i) di(p-nonyl-calix[8]arene)diether-hydroxyl-s-triazine;
j) (p-nonyl-calix[8]arene)ether-di-(p-nonyl-calix[8]arene)'diether-s-triazine;
k) di(p-phenyl-c-p-nonyl-calix[8]arene)dietherhydroxyl-s-triazine;
l) (p-phenyl-co-p-nonyl-calix[8]arene)ether-di(p-phenyl-co-p-nonyl-calix[8]arene)'diether-s-triazine;
m) tri-(p-nonyl-calix[8]arene)triether-s-triazine;
n) tri(p-phenyl-co-p-nonyl-calix[8]arene)triether-s-triazine;
o) [(p-nonyl-calix[8]arene)-(hydroxyl-s-triazine)]copolyether;
p) [(p-phenyl-co-p-nonyl-calix[8]arene)-(hydroxyl-s-triazine)]copolyether;
q. [(p-nonyl-calix[8]arene)-(s-triazine)]starpolyether; and
r) [(p-phenyl-co-p-nonyl-calix[8]arene)-(s-triazine)]starpolyether.

The above list of products (i.e., component a, b, c,etc.) are further identified below in Table I. In Table I, the products are further identified by listing the structure in which they are represented as well as identifying the $R_2$ and $R_6$ in the structures.

TABLE I

| NOMENCLATURE AND CORRESPONDING STRUCTURE FOR SUBSTITUTED CALIX-ARENES | | | |
|---|---|---|---|
| NAME | STRUCTURE | $R_2$ | $R_6$ |
| a | VI | $C_9H_{19}$ | $C_9H_{19}$ |
| b | VII | $C_9H_{19}$ | $C_9H_{19}$ |
| c | VIII | $C_9H_{19}$ | $C_9H_{19}$ |
| d | IX | $C_9H_{19}$ | $C_9H_{19}$ |
| e | VI | $C_9H_{19}$ | Phenyl |
| f | VII | $C_9H_{19}$ | Phenyl |
| g | VIII | $C_9H_{19}$ | Phenyl |
| h | IX | $C_9H_{19}$ | Phenyl |
| i | X | -- | -- |
| j | XI | -- | -- |
| k | X | -- | -- |
| l | XI | -- | -- |
| m | XII | -- | -- |
| n | XII | -- | -- |
| o | XIII | -- | -- |
| p | XIII | -- | -- |
| q | XIV | -- | -- |
| r | XIV | -- | -- |

In a further aspect, the present invention relates to the use of linear or ladder poly[1-hydroxyl-(2,6-phenylene methylene)] material in encapsulation. These can be referred to as flexible or non-rigid calix - arenes (XV).

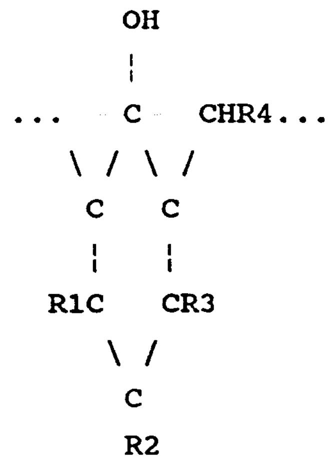

(XV)

One or two covalent ether bonds attach s-triazine to the phenolic portion of the single oligomeric backbone. Polymeric materials are those materials containing linear (ladder) or star repeat units. These complex repeat units are obtained upon condensation of more than one unit apiece of either hydroxyl-s-triazine and poly[1-hydroxyl-(2,6-phenylene methylene)]. Although examples from each category are provided below, it must be noted that infinite structural permutations of these materials are possible. It should be emphasized, however, that in a typical reaction, a mixture of products will be generated. By skillful manipulation of experimental parameters, however, one or more structural orientations may be favored at the expense of another.

Below, in naming the Category I and Category II compounds (i.e., the oligomeric and polymeric repeating units) numerals are provided after some, and, the corresponding structures for such compounds are provided therafter.

Category I    Oligomeric Repeating Units

a) 1-(poly[1-hydroxyl-(2,6-phenylene methylene)])-3,5-dihydroxy-s-triazine as structurally depicted in (XVI);
b) cyclo-1,3-(poly[1-hydroxyl-2,6-phenylene methylene)])-5-hydroxy-s-triazine as structurally depicted in (XVII);
c) {1-(phenoxy)-3-(phenoxy')-5-hydroxy-s-triazine-{poly [1-hydroxyl-(2,6-phenylene methylene)] as structurally depicted in (XVIII);
d) any oligomeric and monomeric permutation hitherto described.

Category II    Polymeric Repeating Units

a) ladder polymers containing randomly interdispersed s-triazine 'steps' as structurally depicted in (XIX);
b) star polymers containing randomly interdispersed s-triazine connector sites for poly[1-hydroxyl-(2,6-phenylene methylene)] groups but where one or more pendant hydroxyl-s-triazine functions are also present as structurally depicted in (XX);
c) ladder polymers containing randomly interdispersed s-triazine 'steps' and where oligomeric portions as described in the Oligomeric Category are also present;
d) star polymers containing randomly interdispersed s-triazine connector sites for poly[1-hydroxyl-(2,6-phenylene methylene)]groups and where oligomeric portions as described in the Oligomeric Category are also present;
e) any oligomeric and polymeric permutation heretofore described.

The structures indicated above (i.e., XVI through XX are provided below:

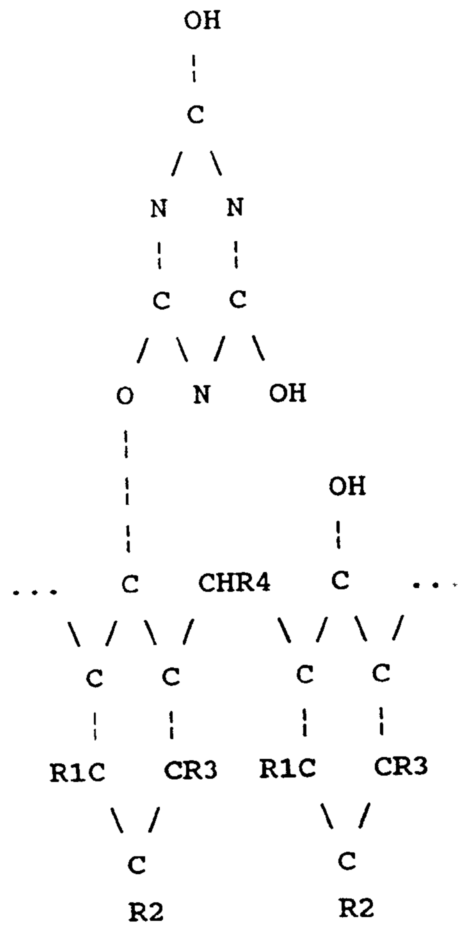

(XVI)

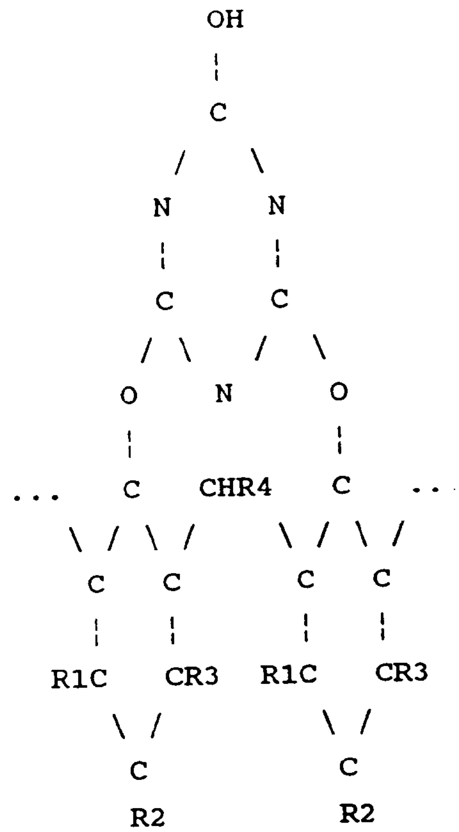

(XVII)

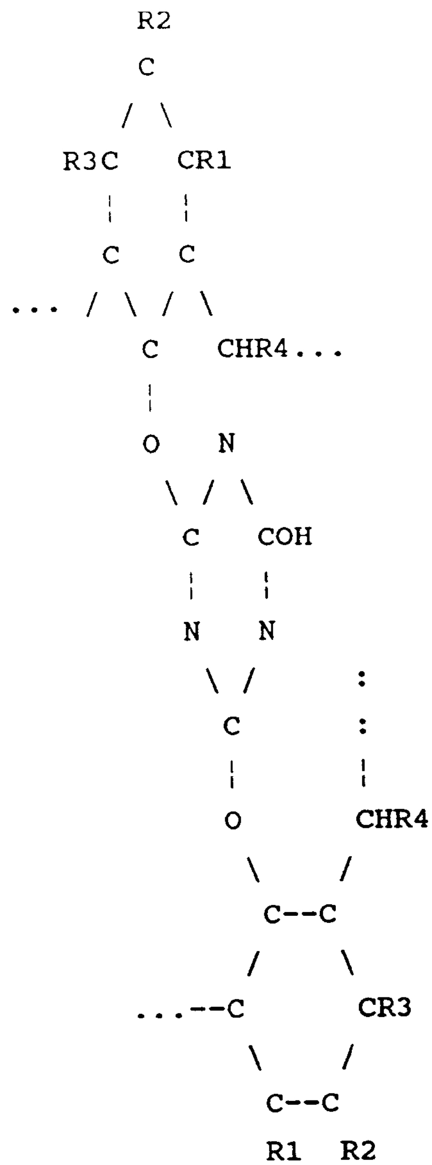

(XVIII)

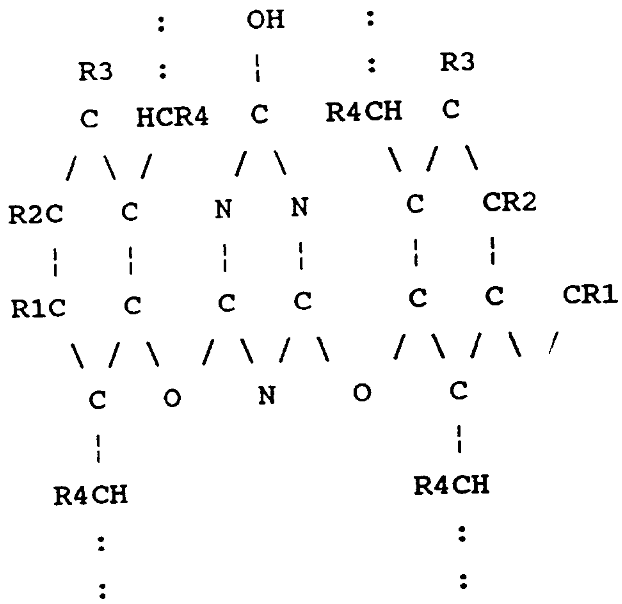

(XIX)

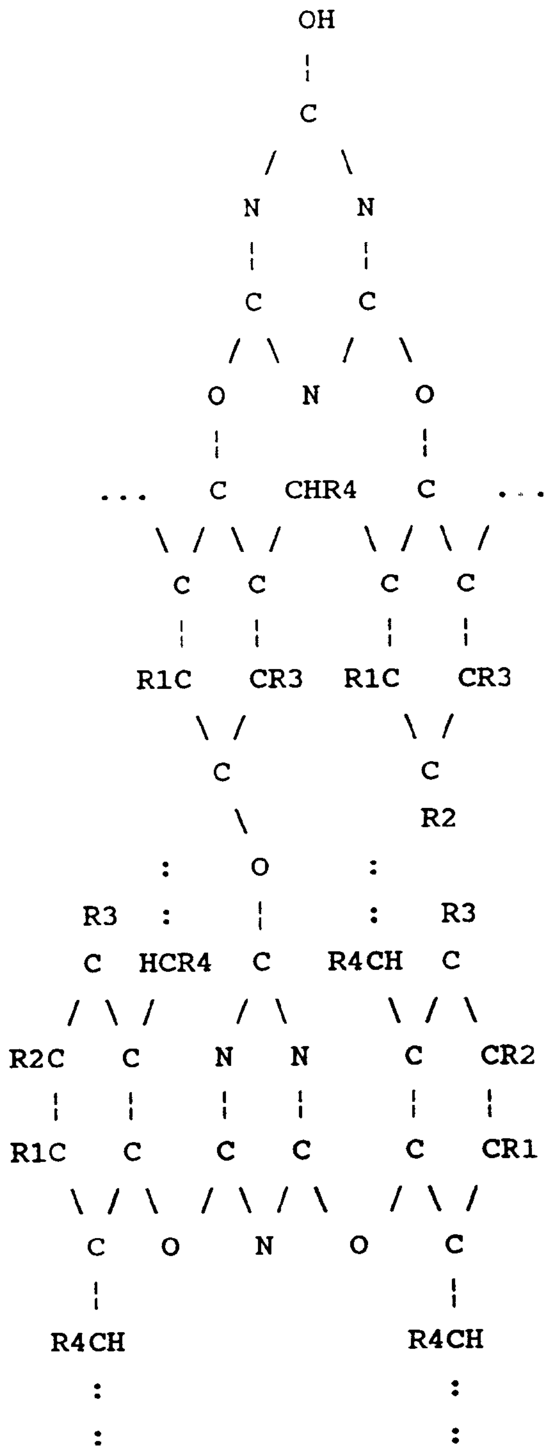

(XX)

In all of the above structures n represents the repeat unit of the oligomer. Its range may vary from 3 to 3000, but its most preferable range is from 3 to 10. R1, R2, and R3 are substituents designed to enhance both the solubility and thermal properties of the oligomer. They may be hydrogen or selected from the group of C1 through C50 hydrocarbons, including linear or branched alkyl, or cyclo-alkyl groups; aromatic or polyaromatic; alkylaromatic and alkylpolyaromatic; saturated or unsaturated. They may also contain one or more heteroatoms as either an appendage or as part of one or more ring, cyclic or aromatic, structure. R4 represents hydrogen or a C1 to C10 hydrocarbon. The hydrocarbon is ideally linear, but may also be branched; saturated or unsaturated; aromatic, polyaromatic, alkylaromatic, or alkylpolyaromatic.

The chemical method or process used to chemically encapsulate hydroxyl-s-triazines into poly[1-hydroxyl-(2,6-phenylene methylene)] is shown below in Equation (Eq.) 5.

For illustrative purposes only, Eq. 5 shows poly[1- 1-hydroxyl (2,6-phenylene methylene)] reacting with and subsequently encapsulating trichloro-s-triazine which encapsulating is illustrated below in above structures XVI, XVII and XVIII, where $R_1$ through $R_4$ are as defined above.

Eq. 5:

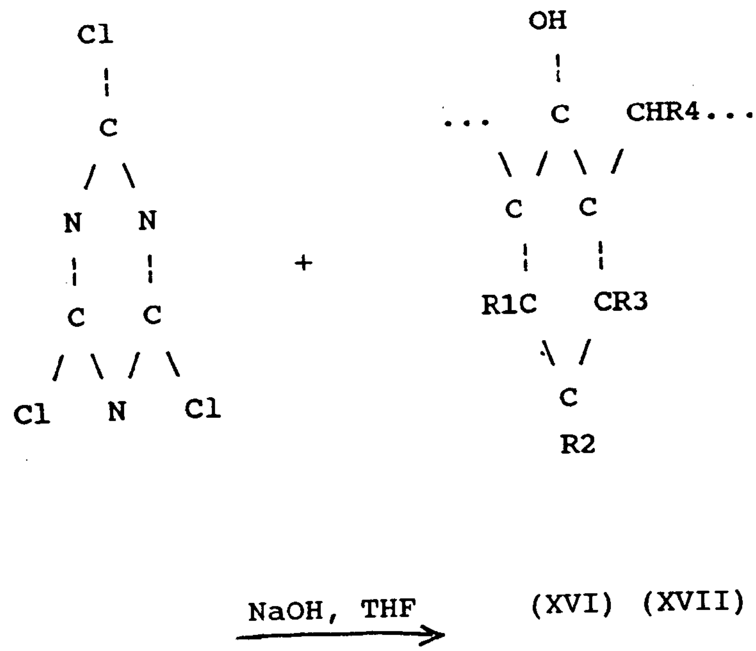


(XVI) (XVII) (XVIII)

EXAMPLES

EXAMPLE 1

Preparation of p-nonyl-calix[8]arene

A three neck round bottom equipped with a magnetic stirrer, thermometer, and reflux condenser with a Dean-Stark adapter was charged with 30 parts p-n-nonylphenol, 400 parts, xylene, 1 part potassium hydroxide, and 8 parts paraformaldehyde and heated to reflux for 48 hours. Sufficient hydrochloride acid was added to neutralize the residue base and the mixture vacuum distilled to remove the unreacted reagents and solvent to provide the present prepared product. The resinous material; i.e., the present product was redissolved in xylene and precipitated in a copious amount of a 4:1 v/v methanol-water mixture, respectively.

EXAMPLE II

Preparation Of p-Phenyl-Co-p-Nonyl-Calix[8]arene

A 2:5 mole-mole ratio of p-phenylphenol and p-n-nonyl-phenol, respectively, is substituted for the p-n-nonylphenol of Example 1, above, and the procedure thereof used herein to produce the prepared (i.e., reaction) product of this Example.

EXAMPLE III

Preparation Of p-Phenol-Co-p-Phenol-Calix[8]arene

A 1:5 mole-mole ratio of p-phenylphenol and p-n-nonyl-phenol, respectively, is substituted for the p-n-nonylphenol of Example 1, above, and the procedure thereof used herein to produce the prepared (i.e., reaction) product of this Example.

EXAMPLE IV

Preparation Of p-Phenyl-Co-p-Nonylcalix[8]arene

A 5:1 mole-mole ratio of p-phenylphenol and p-n-nonyl -phenol, respectively, is substituted for the p-n-nonylphenol of Example 1, above, and the procedure thereof used herein to produce the prepared (i.e., reaction) product of this Example.

EXAMPLE V

Reaction Of P-n-Nonyl Calix[8]arene With Trichloro-s-Triazine

A 4-neck flask equipped with a magnetic stirrer, thermometer, reflux condenser, and addition funnel with a pressure equalizing arm was charged with 500 parts xylene, 2 parts water, and 150 parts p-n-nonylcalix-[8]arene and 6 parts trichloro-s-triazine dissolved in anhydrous tetrahydrofuran were added dropwise. The mixture was refluxed for two hours, cooled to ambient temperature and filtered through cellulose filter paper to remove precipitated sodium chloride and solvent subsequently removed by atmospheric distillation to provide the present prepared product.

EXAMPLE VI

Reaction Of p-Phenyl-Co-p-Nonyl calix[8]arene With Trichloro-s-Triazine

The reaction product from Example 2 is substituted for the p-n-nonylphenol of Example 1, above, and the procedure thereof used in Example V to produce the prepared (i.e., reaction) product of this Example.

EXAMPLE VII

Reaction Of p-Phenyl-Co-p-Nonylcalix[8]arene With Trichloro-s-Triazine

The product from Example 3 is substituted for the p-n-nonylphenol of Example 1, above, and the procedure thereof used in Example V to produce the prepared (i.e., reaction) product of this Example.

EXAMPLE VIII

Reaction Of p-Phenyl-Co-p-Nonylcalix[8]arene With Trichloro-s-Triazine

The product from Example 4 is substituted for the p-n-nonylphenol of Example 1, above, and the procedure thereof used in Example V to produce the prepared (i.e., reaction) product of this Example.

The materials synthesized according to the present invention and illustrated in the above Examples were structurally and physically evaluated. The key structural property of interest was the unequivocal detection of hydroxyls-triazines encapsulated within the oligomeric matrix. This evaluation was performed using Fourier Transform Infrared spectroscopy (FTIR). Results of FTIR studies are summarized below in Table II. Moreover, high pressure liquid chromatography was also performed to qualify the number of oligomeric materials present within each experimental sample. Results of this investigation and experimental separation parameters are summarized below in Table III.

Physical testing was concerned with the solubility of encapsulated samples in diesel fuel and thermal stability of the neat sample. Results of solubility studies involving both non-encapsulated materials are summarized below in Table IV. Thermal stability studies were performed using Thermal Gravimetric Analysis (TGA) utilizing a heating rate of 200 deg C/min. TGA summaries of selected samples are provided below in Table V.

TABLE II

| Detection of Encapsulated Hydroxyl-s- Triazine Within AnOligomeric Matrix | | | | |
|---|---|---|---|---|
| Sample | Phenolic OH Stretch | Phenolic OH Deformation | Cyanuric Acid OH Stretch | Cyanuric Acid OH Deformation |
| | (cm-1) | (cm-1) | (cm-1) | (cm-1) |
| Cyanuric Acid | - | - | 3203 | 1390 |
| Example 5 | 3471,3077,3030 | 1238 | 3211 | 1389 |
| Example 6 | 3191,3072 3040 | 1216 | 3201 | 1390 |
| Example 7 | 3477,3081 3059 | 1233 | 3206 | 1390 |
| Example 8 | 3444,3062 3048 | 1226 | 3200 | 1388 |

All FTIR evaluations for experimental samples from each of Examples 5, 6, 7 and 8 were obtained using films produced using THF as the solvent and NaCl discs. FTIR analysis of cyanuric acid was performed by suspending in Nyjol mineral oil.

TABLE III

| Summary Of Peak Detection Of Experimental Samples Using HPLC | |
|---|---|
| Sample Mixture | Components Detected |
| Example 5 | 3 |
| Example 6 | 5 |
| Example 7 | 5 |
| Example 8 | 6 |

The column used for the analysis was non-polar (C18; HS-3 C1) reverse phase using a sample concentration of 16.0 mg/10 mls THF. The injection volume was routinely 20 microliters and a detection wavelength was 250 nm was used for all samples.

TABLE IV

| Maximum Solubility Of Encapsulated Hydroxy-s-Triazines In Poly[1-Hydroxyl-(2,6-Phenylene Methylene)]Derivatives In Diesel Fuel | |
|---|---|
| Solute Concentration at Turbidity Point | |
| Sample | (wt%) |
| Example 5 | ~1 |
| Example 6 | 35 |
| Example 7 | 2 |
| Example 8 | 1 |

TABLE V

| Thermal Decomposition Of Experimental Precursors And Encapsulated Hydroxyl-s-Triazines Using A Heating Rate Of 200°C/min Under Nitrogen | | |
|---|---|---|
| Sample | 50 wt% Decomposition Temp. (deg C) | 90 wt% Decomposition Temp. (deg C) |
| Example 5 | 500 | < 800 |
| Example 6 | 560 | < 950 |
| Example 7 | 510 | 570 |
| Example 8 | 520 | 580 |

EXAMPLE IX

Preparation of poly[1-hydroxyl-(2,6-phenylene methylene)]

Purified phenol, 94.0 g, was placed into a 500 ml resin reaction flask. The accompanying 4-neck flat flange top contained a vacuum stirrer with a 2" Teflon blade, thermometer with a vacuum seal, a three foot hollow reflux tube packed with 2 1/2 feet of 3 mm glass beads, and a 125 ml cylindrical separatory funnel with a pressure equalizing arm. A 50 ml gas trap, packed with ice-cold brine, was attached to the reflux tube. The reaction flask was immersed in an oil bath and gently heated; once at 120°C, a suspension of Ca(OH)2, 0.282 g/5mls water, quickly added. Once the temperature reached 165°C - 170°C, a dropwise addition of 37 wt% formaldehyde solution in water, 27 g, commenced.

Strong heating continued to ensure the temperature remained within the aforementioned specifications and continued for about 4 to 5 hours. Fluid collected in the gas trap was routinely re-delivered into the kettle. At the conclusion of the reaction, the contents were distilled under vacuum and heated gently to remove unreacted formaldehyde and water. Strong heating followed to remove unreacted phenol and lower weight condensation products. The contents of the kettle were then dissolved into 1 liter ethanol containing 10 g NaOH; filtered; and precipitated in 3.0 liters of 10 wt% aqueous HCl; the process being repeated three times. The ultimate product, i.e., doly[1-hydroxyl-(2,6-phenylene-methylene)], was subsequently dissolved in 100 mls acetone and dried over anhydrous MgSO4; vacuumed stripped 24 hours later; and stored in a dedicator containing CaCl2 until needed.

EXAMPLE X

Preparation of poly[1-hydroxyl-(2,6-(p-methyl)-phenylen methylene)]

Purified cresol should be substituted for the phenol of Example IX of this Example and the procedure set forth in Example IX should be followed in this Example to obtain the product herein.

EXAMPLE XI

Preparation of poly[1-hydroxyl-(2,6-(p-nonyl)-phenylene methylene)]

Purified nonylphenol should be substituted for the phenol of Example IX in this Example and the procedure set forth in Example IX should be followed in this Example to obtain the product herein.

EXAMPLE XII

Preparation of poly[1-hydroxyl-(2,6-(p-phenyl)-phenylene methylene)]

Purified phenylphenol should be substituted for the phenol of Example IX in this Example and the procedure set forth in Example IX should be followed in this Example to obtain the product herein.

EXAMPLE XIII

Preparation of poly{1-hydroxyl-[(2,6-(p-methyl)-phenylene methylene)-co-(2,6-(p-phenyl)-phenylene methylene)]}

A 1:1 mole ratio of p-phenylphenol and p-cresol should be substituted for the phenol of Example IX in this Example and the procedure set forth in Example IX should be used in this Example to obtain the product herein.

EXAMPLE XIV

Preparation of poly{1-hydroxyl-[2,6-(p-nonyl)-phenylene methylene)-co-(2,6-(p-phenyl)-phenylene methylene)]}

A 1:1 mole ratio of p-phenylphenol and p-nonylphenol should be substituted for the phenol of Example IX in this Example and the procedure set forth in Example IX should be used in this Example to obtain the product herein.

EXAMPLE XV

Oligomeric encapsulation of hydroxyl-s-triazine using poly[1-hydroxyl-(2,6-phenylene methylene)] and cyanuric trichloride.

Approximately 15 parts poly[1-hydroxyl-(2,6-phenylene methylene)] was dissolved in 200 parts xylene and sufficient NaOH added to convert 10% to 15% hydroxyl portion to the corresponding sodium phenoxide. Approximately 3 parts of cyanuric trichloride dissolved in 50 parts anhydrous THF was quickly added and the mixture heated to reflux for 2 hours. The mixture was cooled; filtered to remove sodium chloride; and the solvent removed by vacuum stripping to result in the encapsulation product herein.

EXAMPLE XVI

Oligomeric encapsulation of hydroxyl-s-triazine using poly[1-hydroxyl-(2,6-(p-nonyl)phenylene methylene)] and cyanuric trichloride

Poly[1-hydroxyl-(2,6-(p-nonyl)phenylene methylene)] should be substituted for the poly[1-hydroxyl-2,6-phenylene methylene)] of Example XV in this Example and the procedure set forth in Example XV should be followed in this Example to obtain the encapsulation product herein.

EXAMPLE XVII

Oligomeric encapsulation of hydroxyl-s-triazine using poly[1-hydroxyl-(2,6-(p-phenyl)phenylene methylene)] and cyanuric trichloride

Poly[1-hydroxyl-(2,6-(p-phenyl)phenylenemethylene)] should be substituted for the poly [1-hydroxyl 2,6-phenylene methylene) of Example XV in this Example and the procedure set forth in Example XV should be used in this Example to obtain the encapsulation product herein.

EXAMPLE XVIII

Oligomeric encapsulation of hydroxyl-s-triazine using poly{1-hydroxyl-[2,6-(p-nonyl)phenylene methylene]-co-[2,6-(p-phenyl)phenylene methylene]} and cyanuric trichloride

Poly{1-hydroxyl-[2,6-(p-nonyl)phenylene methylene]-co-[2,6-(p-phenyl)-phenylene methylene]} should be substituted for the poly[1-hydroxyl 2,6-phenylene methylene] of Example XV in this Example and the procedure set forth in Example XV should be followed in this Example to obtain the encapsulation product herein.

TESTING AND EVALUATION

The materials synthesized according to the above Examples were structurally and physically evaluated.

The key structural property of interest was the detection of hydroxyl-s-triazines encapsulated within the oligomeric or polymer matrix. This evaluation was performed using Fourier transform Infrared spectroscopy (FTIR). Results of FTIR studies are summarized below in Table VI Moreover, high pressure liquid chromatography was also performed to qualify the number of oligomeric materials present within each experimental sample. Results of this investigation and experimental separation parameters are summarized below in Table VII.

Physical testing was concerned with the solubility of encapsulated samples in diesel fuel and thermal stability of the neat sample. Results of solubility studies involving both non- and encapsulated are materials summarized below in Table VIII. Thermal stability studies were performed using Thermal Gravimetric Analysis (TGA) designed to mimic an internal engine combustion event. This was achieved by utilizing a heating rate of 200 deg C/min. TGA summaries of selected samples are provided below in Table IX.

TABLE VI

| Detection Of Encapsulated Hydroxyl-s-Triazine Within An Oligomeric Matrix | | | | |
|---|---|---|---|---|
| Sample | Phenolic OH Stretch | Phenolic OH Deformation | Cyanuric Acid OH Stretch | Cyanuric Acid OH Deformation |
| | (cm-1) | (cm-1) | (cm-1) | (cm-1) |
| Cyanuric Acid | - | - | 3203 | 1390 |
| Example XV | 3419,3065 3022 | 1216 | 3203 | 1380 |
| Example XVI | 3462,3081 3016 | 1233 | 3204 | 1380 |
| Example XVII | 3465,3087 3050 | 1237 | 3203 | 1381 |
| Example XVIII | 3478,3030 3004 | 1222 | 3200 | 1382 |

All FTIR evaluations for experimental samples from each of Examples XV - XVIII were obtained using films produced using THF as the solvent and NaCl discs. FTIR analysis for cyanuric acid was performed by suspending in Nyjol mineral oil.

TABLE VII

Summary Of Peak Detection Of Experimental Samples Using HPLC

The column used for the analysis was non-polar (C18; HS-3 C1) reverse phase using a sample concentration of 16.0 mg/10 mls THF. The injection volume was routinely 20 microliters and a detection wavelength was 250 nm was used for all samples from Examples XV - XVIII.

| Sample Mixture | Components Detected |
|---|---|
| Example XV | 6 |
| Example XVI | 6 |
| Example XVII | 3 |
| Example XVIII | 3 |

TABLE XVIII

| Maximum Solubility Of Encapsulated Hydroxyl-s-Triazines In Poly[1-Hydroxyl-(2,6-Phenylene Methylene)] Derivatives In Diesel Fuel | |
|---|---|
| Sample | Solute Concentration at Turbidity Point |
| Example XV | 1.5 |
| Example XVI | 10 |
| Example XVII | >0.5 |
| Example XVIII | 20 |

TABLE XIX

| Thermal Decomposition Of Experimental Precursors And Encapsulated Hydroxyl-s-Triazines Using A Heating Rate Of 200 Deg C/min Under Nitrogen | | |
|---|---|---|
| Sample | 50 wt% Decomposition Temp. (deg C) | 90 wt.% Loss Decomposition Temp. (deg. C) |
| Example XV | 490 | 660 |
| Example XVI | 565 | 785 |
| Example XVII | 665 | < 920 |
| Example XVIII | 570 | < 920 |

**Claims**

1. A rigid or non-rigid calix - arene matrix fully or partially encapsulating an s-triazine containing at least one hydroxyl group or a functionality which may be chemically converted *in situ* into a hydroxyl group.

2. A compound as claimed in Claim 1 selected from the group comprising:

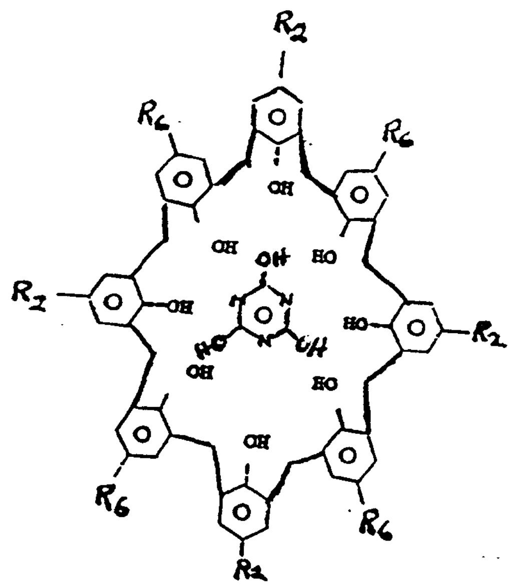

(VI)

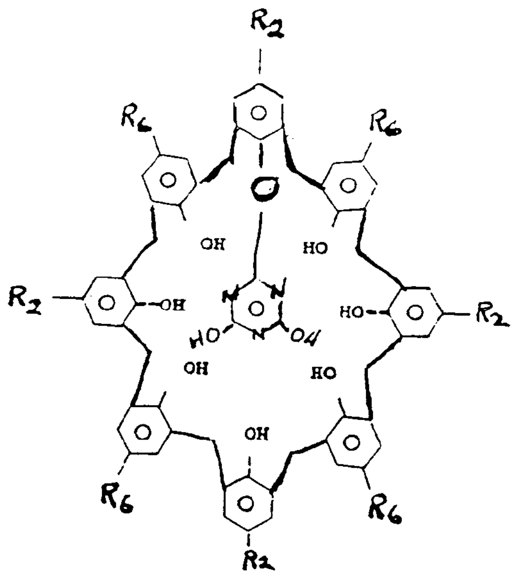

(VII)

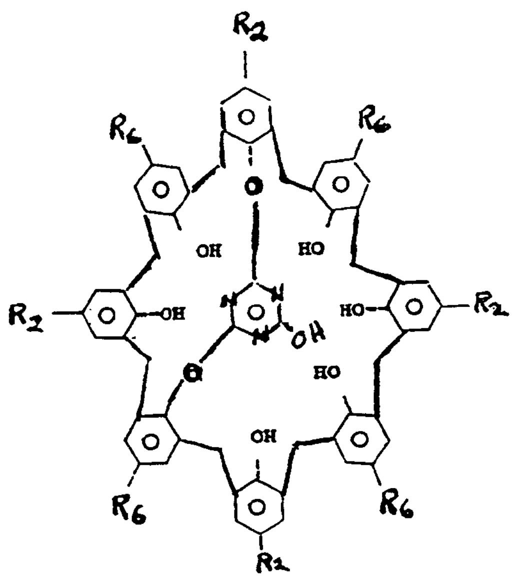

(VIII)

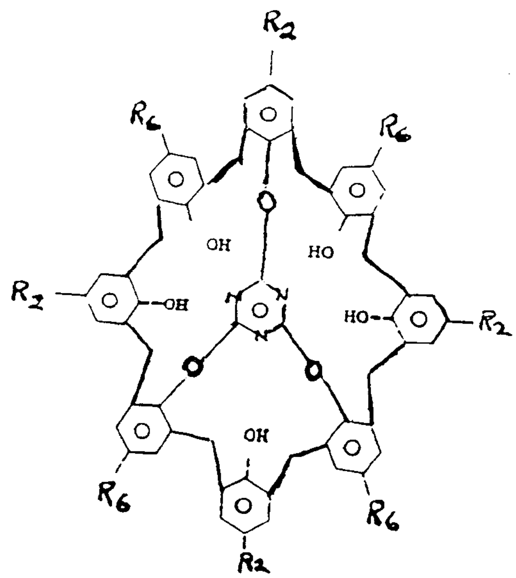

(IX)

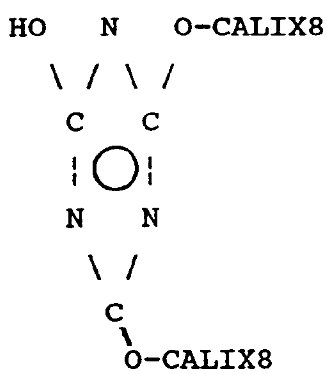

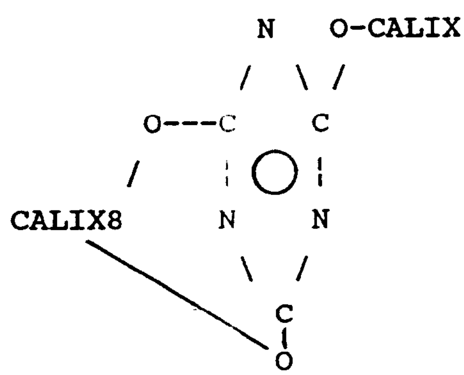

(X) (XI)

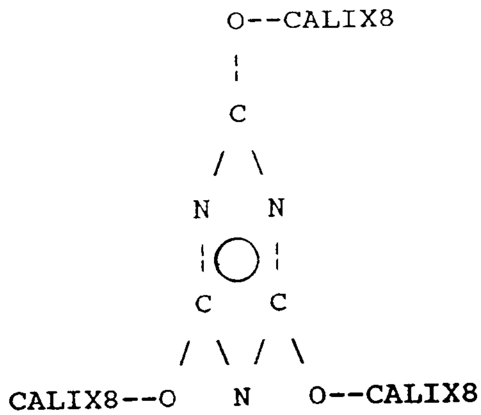

(XII)

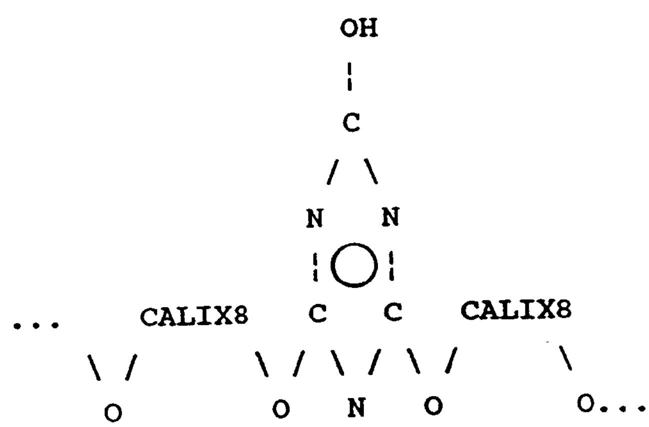

(XIII)

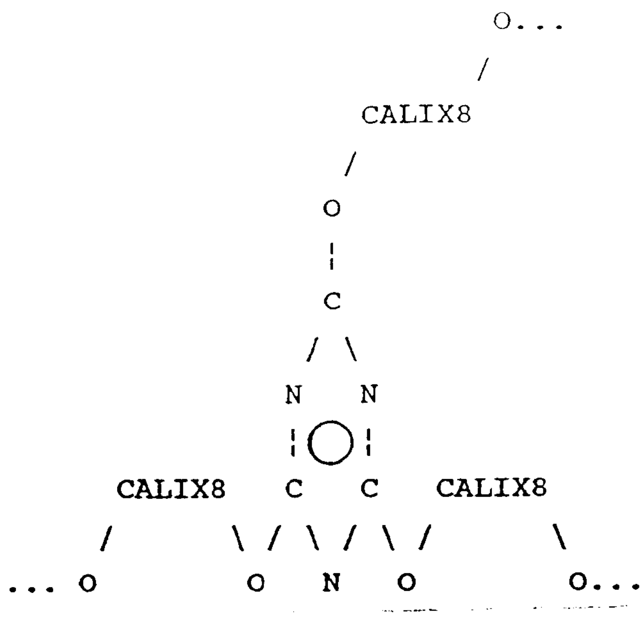

(XIV)

wherein $R_2$ and $R_6$ are each hydrogen or a ($C_1$-$C_{50}$) hydrocarbon, and wherein $R_4$ is as previously defined.

**3.** A compound as claimed in Claim 1 selected from the group comprising:
a) p-nonyl calix[8]arene-tri-hydroxyl-s-triazine;
b) (p-nonyl calix[8]arene)ether-di-hydroxyl-s-triazine;
c) (p-nonyl-calix[8]arene)diether-hydroxyl-s-triazine;
d) (p-nonyl-calix[8]arene)triether-s-triazine;
e) (p-phenyl-co-p-nonyl-calix[8]arene-trihydroxyl-s-triazine;
f) p-phenyl-co-p-nonyl-calix[8]arene ether-dihydroxyl-s-triazine;
g) (p-phenyl-c-p-nonyl-calix[8]arene)diether-s-triazine;
h) (phenyl-co-p-nonyl-calix[8]-arene)trietherhydroxyl-s-triazine;
i) di(p-nonyl-calix[8]arene)diether-hydroxyl-s-triazine;
j) (p-nonyl-calix[8]arene)ether-di-(p-nonyl-calix[8]arene) 'diether-s-triazine;
k) di(p-phenyl-c-p-nonyl-calix[8]arene)dietherhydroxyl-s-triazine;
l) (p-phenyl-co-p-nonyl-calix[8]arene)ether-di(p-phenyl-co-p-nonyl-calix[8]arene)'diether-s-triazine;
m) tri-(p-nonyl-calix[8]arene)triether-s-triazine;
n) tri(p-phenyl-co-p-nonyl-calix[8]arene)triether-s-triazine;
o) [(p-nonyl-calix[8]arene)-(hydroxyl-s-triazine)]copolyether;
p) [(p-phenyl-co-p-nonyl-calix[8]arene)-(hydroxyl-s-triazine)]copolyether;
q. [(p-nonyl-calix[8]arene)-(s-triazine)]starpolyether; and
r) [(p-phenyl-co-p-nonyl-calix[8]arene)-(s-triazine)]starpolyether.

**4.** A composition as claimed in Claim 1 selected from the group comprising:

(a)

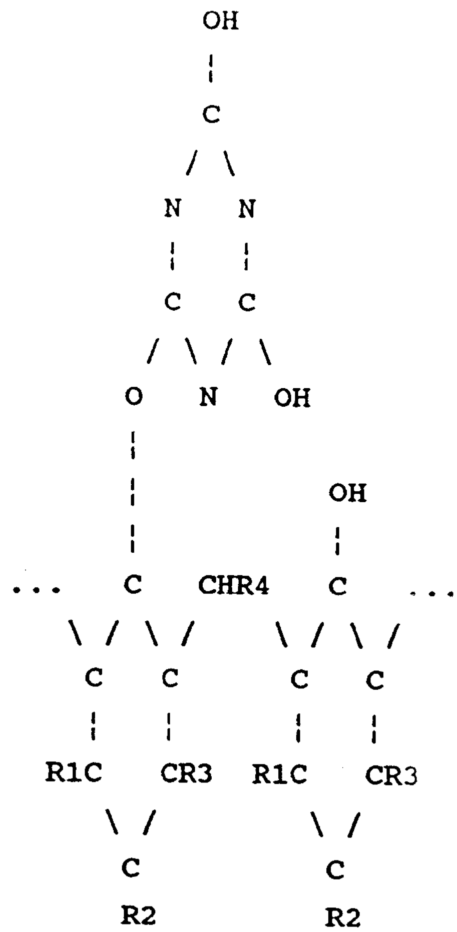

b)

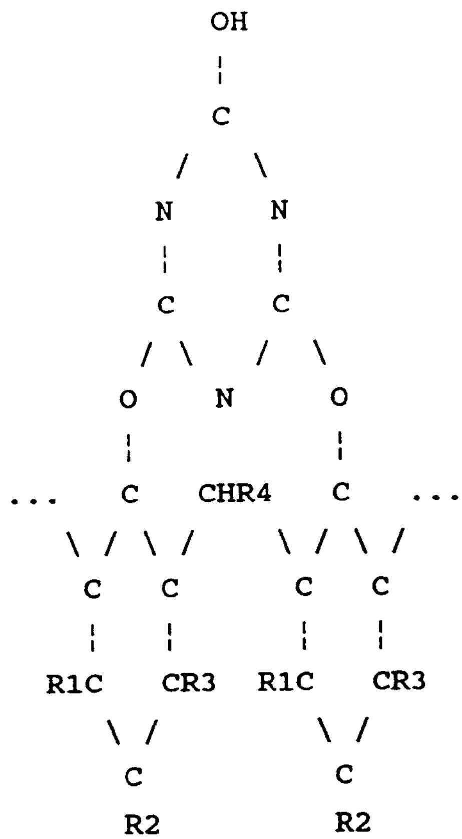

c)

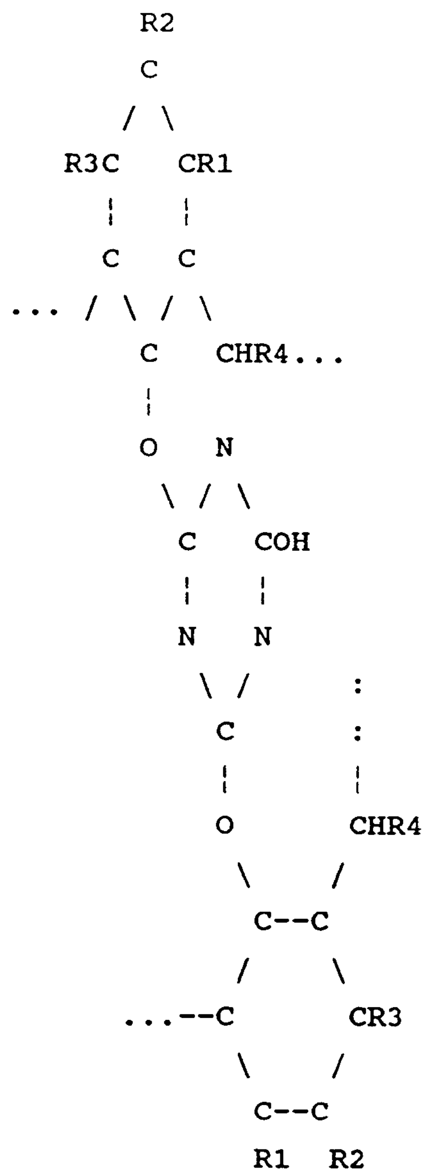

d)

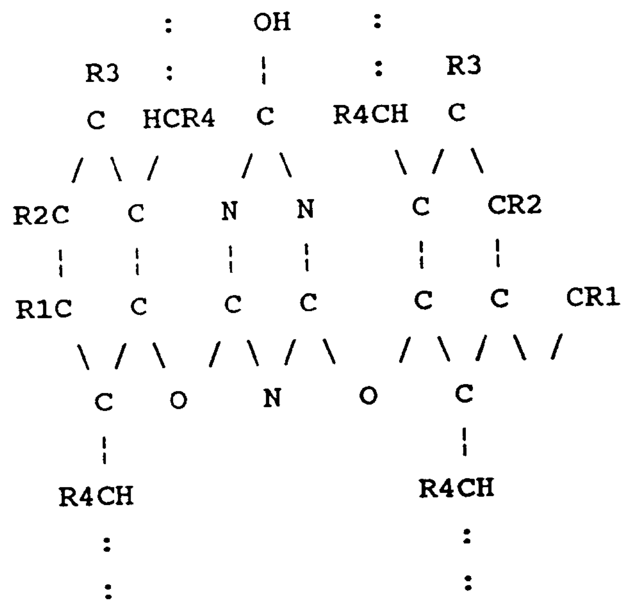

and;

e) 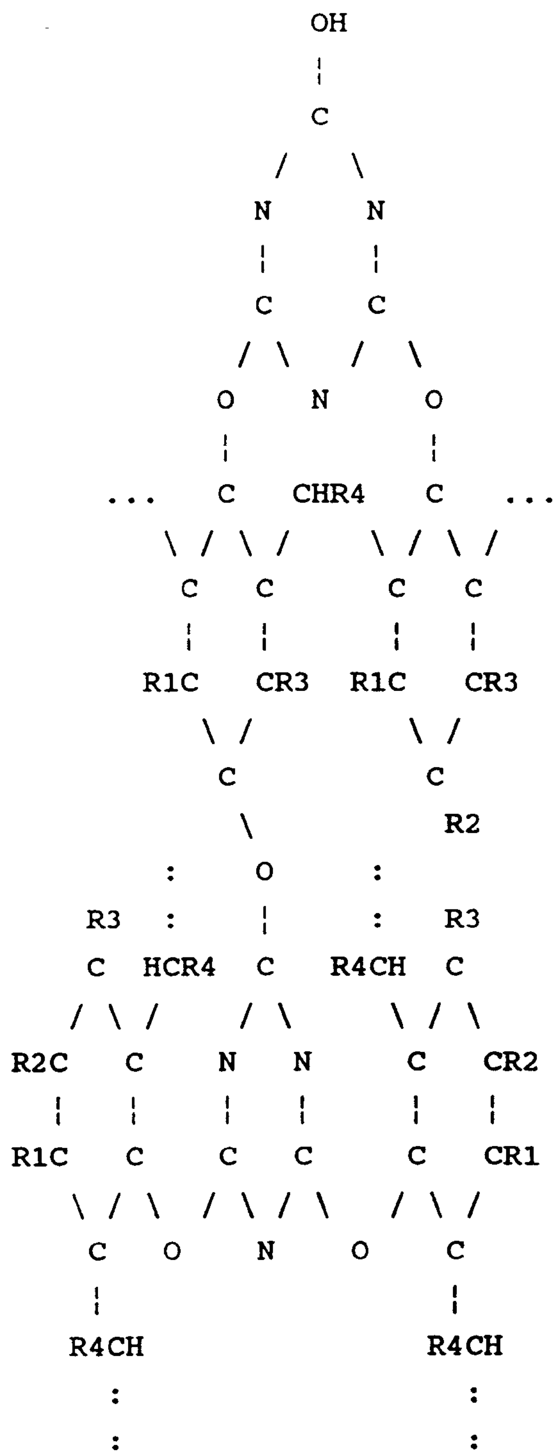

wherein the integer n varies from 3-3000; $R_1$, $R_2$, and $R_3$ are each H or a ($C_1$-$C_{50}$) linear or branched alkyl, aromatic, polyaromatic, alkylaromatic, alkylpolyaromatic, unsaturated or saturated hydrocarbon group; $R_4$ and $R_5$ are each a ($C_1$-$C_{10}$) hydrocarbon group as defined for $R_1$, $R_2$ and $R_3$.

**5.** A compound as claimed in Claim 1 selected from the group comprising:
a) 1-(poly[1-hydroxyl-(2,6-phenylene methylene)])-3,5-dihydroxy-s-triazine;
b) cyclo-1,3-(poly[1-hydroxyl-2,6-phenylenemethylene)])-5-hydroxy-s-triazine;
c) {1-(phenoxy)-3-(phenoxy')-5-hydroxy-s-triazine-}poly[1-hydroxyl-(2,6-phenylene methylene)];
d) a ladder polymer containing randomly interdispersed s-triazine 'steps'; and

e) a star polymer containing randomly interdispersed s-triazine connector sites for poly[1-hydroxyl-(2,6-phenylene methylene)] groups but where one or more pendant hydroxyl-s-triazine functions are also present.

**6.** A process for the production of a composition as claimed in Claim 1 which comprises reacting an s-triazine containing at least one hydroxyl group or a functionality which may be chemically converted in situ into a hydroxyl group with an alkaline salt of a rigid or non-rigid calix - arene.

**7.** A process for increasing the solubility of an s-triazine containing at least one hydroxyl group or a functionality which may be chemically converted in situ into a hydroxyl group within diesel fuel which comprises fully or partially encapsulating said triazines within a rigid or non-rigid calix - arene matrix.

European Patent Office

# EUROPEAN SEARCH REPORT

Application Number

EP 93 30 1756

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| A | US-A-4 731 231 (ROBERT A. PERRY)<br>* complete document *<br>----- | | C07D251/32<br>C07D251/34<br>C07D498/18<br>C08G83/00<br>C10L1/22 |
| | | | TECHNICAL FIELDS SEARCHED (Int. Cl.5) |
| | | | C07D<br>C08G<br>C10L |

The present search report has been drawn up for all claims

| Place of search | Date of completion of the search | Examiner |
|---|---|---|
| THE HAGUE | 01 JULY 1993 | VAN BIJLEN H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)